# EUROPÄISCHE PATENTSCHRIFT

(11) **EP 0 743 735 B1**
(45) Veröffentlichungstag und Bekanntmachung des Hinweises auf die Patenterteilung: **02.03.2005**
(21) Anmeldenummer: 96107920.9
(22) Anmeldetag: 17.05.1996
(51) Int. Cl.: H02G 3/38, H02G 3/04

(54) **Anordnung zur Bündelung von Versorgungsleitungen für ein Gebäude**
Bundling arrangement for feeding lines in a building
Dispositif de regroupement de lignes d'alimentation dans un bâtiment

(30) Priorität: 16.05.1995 DE 19517984
(43) Veröffentlichungstag der Anmeldung: 20.11.1996
(73) Patentinhaber: Herms, Marc, 09045 Quastu S.E. (CA), Sardinien (IT)
(72) Erfinder: Herms, Günter H., 53721 Siegburg-Kaldauen (DE); Mohr, Franz, 57580 Fensdorf (DE)
(74) Vertreter: Liesegang, Roland, Dr.-Ing.

(56) Entgegenhaltungen:
- EP-A- 0 305 338
- DE-A- 4 411 552
- DE-U- 9 315 256
- GB-A- 1 442 046
- US-A- 2 680 775

## Beschreibung

Die Erfindung betrifft eine Anordnung zur Bündelung von Versorgungsleitungen für ein Gebäude gemäß dem Oberbegriff des Anspruchs 1. Bei einer solchen, aus der DE-U-93 15 256 bekannten Anordnung ist der die Versorgungsleitungen enthaltende Kanal auf dem Fußboden angeordnet, was platzraubend ist und das Aufstellen von Möbeln an einer Zimmerwand ausschließt.

Versorgungsleitungen, wie Wasser-, Stromleitungen, Gasleitungen, werden in einem Gebäude gewöhnlich getrennt voneinander verlegt, wobei solche Leitungen in den Gebäudewänden heuzutage unter Putz angeordnet werden. Dies erfordert ein Schlitzen der Wände des Rohbaus in vertikaler, horizontaler und manchmal sogar schräger Richtung. Dies ist aufwendig.

Nach Fertigstellung des Gebäudes sind viele Leitungen unsichtbar in den Gebäudewänden verlegt. Will der Hausherr nachträglich Möbel an der Wand befestigen oder sonstige Änderungen vornehmen, welche nicht ohne Verletzen der fertiggestellten Wand möglich sind, muß er zunächst den Leitungsverlauf in der Wand mittels Spezialgeräten überprüfen, wenn er keinen Leitungsplan zur Hand hat.

Störungen im Versorgungsleitungssystem, wie Verstopfungen und Korrosion lassen sich wegen der Unzugänglichkeit der in die Wände eingelassenen Leitungen nur mit großem Aufwand orten beheben.

Aus der US-A-2 680 775 ist bekannt, die elektrische Verkabelung von Gebäuden in Kanälen unterhalb des Fußbodens unterzubringen, wobei die Elektrokabel zu Auslässen herausgeführt sind, welche innerhalb einer auf dem Fußboden aufgesetzten Sockelleiste ausgebildet sind. Der Erfindung liegt die Aufgabe zugrunde, eine Anordnung zur Bündelung von Versorgungsleitungen zu schaffen, die in der Bauphase mit minimalem Aufwand verlegbar und in der Gebrauchsphase aufgrund ihrer "Transparenz" ohne Zuhilfenahme eines Leitungsplanes besonders nutzerfreundlich ist.

Zur Lösung dieser Aufgabe ist eine Anordnung gemäß Patentanspruch 1 vorgesehen.

Zweckmäßig verlaufen zumindest Teilabschnitte des Kanals entlang der Innenseite der Gebäudeaußenwand, wobei insbesondere im Falle eines mehrstöckigen Gebäudes ein (z.B. durch das Treppenhaus) unterbrochener offener Ring je Stockwerk vorgesehen sein kann. Es kann aber auch der oder jeder Kanal (pro Stockwerk) einen mit der Strom-, Heizungs- und Wasserversorgung des Gebäudes direkt verbundenen Zentralabschnitt aufweisen, von dem aus Teilabschnitte fingerförmig in die einzelnen Räume abzweigen.

Bei einem mehrstöckigen Gebäude sind die Kanäle in den verschiedenen Stockwerken mit der im Keller oder Erdgeschoß untergebrachten Strom-, Heizungs- und Wasserversorgung vorteilhaft durch einen Steigkanal miteinander verbunden. Dabei kann es sich um einen vom Keller bis zum Dachgeschoß durchgehenden Steigkanal handeln. Der Kanal des Erdgeschosses kann aber auch über einen direkten Durchbruch mit der Energieversorgung im Keller verbunden sein, während der Kanal im Obergeschoß über einen eigenen Steigkanal anschlossen ist.

Die Versorgungsleitungen enthalten in der Regel mindestens eine Heiz- oder Kühlluftleitung, eine davon wärmeisolierte Kalt- und Warmwasserleitung sowie Stromleitungen, und zwar vorzugsweise in separaten Abteiles des Kanals.

Zu den Stromleitungen können Anschlußleitungen für Telefon, Fernsehen, PC, Antenne und dergleichen gehören.

Auch eine oder mehrere Gasleitungen und gegebenenfalls ein Staubsaugschlauch können in dem Kanal untergebracht sein.

Bei einer bevorzugten Anordnung ist der oder jeder Kanal im wesentlichen im Fußboden versenkt angeordnet und hat Auslässe und Schalter für die Versorgungsleitungen. Die Auslässe sind vorteilhaft in einer nach Art einer üblichen Fußleiste geformten Leiste vorgesehen. Diese Leiste kann lösbar mit dem Kanal verbunden sein, insbesondere durch Aufschnappen, um eine einfache Zugänglichkeit insbesondere im Wartungsfall zu gewährleisten.

Bautechnisch besonders einfach ist eine Anordnung, bei welcher der Kanal und gegebenenfalls die Leiste in Elemente genormter Länge aufgeteilt sind, die zur Montage zusammenschiebbar gestaltet sind. Dies ermöglicht eine Großserienfertigung in der Fabrik.

Bei der Anordnung nach der Erfindung ist durch Unterbringung des Kanals im Stoßbereich von Wand und Fußboden eine insbesondere vertikale Schlitzung der Wände des Rohbaus vermieden. Dies und die Möglichkeit der Serienfertigung der Teile des Kanales im voraus verbilligt und verkürzt die Innenausbauphase im Vergleich zu der herkömmlichen Verlegung und Anordnung der Versorgungsleitungen eines Gebäudes ganz erheblich. Die Wände bleiben dabei im wesentlich frei von unsichtbar verlegten Versorgungsleitungen, so daß in der späteren Gebrauchsphase keine unbeabsichtigte Beschädigungsgefahr besteht. Teure Spezialgeräte zur Ortung von unsichtbaren Leitungsverläufen erübrigen sich sowohl für den Hausherr als auch für den Installateur im Falle von Reparatur- oder Wartungsarbeiten, weil der Leitungsverlauf der Anordnung nach der Erfindung auch für den Nichtfachmann völlig klar ist.

Die Anordnung nach der Erfindung bietet auch bedeutende Vorteile bei der Heizungsinstallation und dem Anschluß von im Haushalt üblichen Sanitäreinrichtungen, elektrischen Haushaltsgeräten sowie Geräten zur Unterhaltung und Kommunikation wie Fernsehen, Rundfunk, PC und Telefon. So lassen sich Anschlüsse und Schalter für alle diese Einrichtungen sämtlich im Stoßbereich zwischen Wand und Fußboden unterbringen, wobei jedoch in Ausnahmefällen, z.B. für Brauchwasserleitungen, eine Verlegung unter Putz von dem Wand-Fußbodenbereich bis zu einem Waschbeckenauslaß, einer Badewanne oder dgl. möglich ist.

Aufgrund der Vorfertigung der Kanalteile einschließlich solcher Teile, die mit Anschlüssen versehen sind, lassen sich diese Anschlußteile ohne Verletzung von Wand oder Boden nachträglich an beliebiger Stelle im Raum anordnen.

Eine besonders elegante Lösung zeichnet sich dadurch aus, daß in den Innenräumen lediglich eine übliche Fuß- oder Wandleiste als Teil des Kanals sichtbar wird, wobei die umfangreicheren Teile des Kanals im Boden oder im bodennahen Wandbereich versenkt untergebracht sind. In dieser Fußleiste sind dann auch die Auslässe, Schalter und dergleichen untergebracht, wo sie noch hinreichend bequem erreichbar sind. Die Fußleiste kann dabei mittels einer Schnapp- oder Steckverbindung lösbar mit dem Kanal verbunden sein, was Wartungs- oder Reparaturarbeiten sowie eine nachträgliche lokale Verlagerung von Anschluß-, Zapf- oder Schaltstellen sehr einfach gestaltet.

Die Erfindung ist im folgenden anhand schematischer Zeichnungen an Ausführungsbeispielen mit weiteren Einzelheiten nächer erläutert. Es zeigen:
- Fig. 1a und 1b: den Grundriß des Erdgeschosses und den Grundriß des ersten Obergeschosses eines zweistöckigen Gebäudes, das mit einer Anordnung gemäß der Erfindung ausgerüstet ist;
- Fig. 2a und 2b: Grundrisse von Erd- und Obergeschoß eines Gebäudes mit einer abgewandelten Anordnung gemäß der Erfindung;
- Fig. 3: in größerem Maßstab einen Teilschnitt nach der Linie III-III in Fig. 1 im Bereich einer Türöffnung;
- Fig. 4: eine teilweise aufgebrochene perspektivische Teilansicht auf eine Anordnung gemäß der Erfindung gemäß Fig. 3;
- Fig. 5: einen Teilschnitt durch eine abgewandelte Anordnung nach der Erfindung ähnlich Fig. 3;
- Fig. 6: eine perspektivische Teilansicht auf einen aufgebrochenen Kanal gemäß der Erfindung enthaltend die Abwandlung gemäß Fig. 5;
- Fig. 7: eine perspektivisch, aufgebrochene Teilansicht eines Eckenbereichs eines Kanals gemäß der Erfindung;
- Fig. 8: eine perspektivische Teilansicht eines Verzweigungsabschnittes zu einem Steigkanal gemäß der Erfindung;
- Fig. 9: ein Kanalelement des erfindungsgemäßen Kanals, das zum Ineinanderstecken mit anderen Kanalelementen gestaltet ist;
- Fig. 10: ein Kanalelement, das mit einem Schieber zum Verändern von Öffnungsquerschnitten für Heiz oder Kühlluft ausgerüstet ist; und
- Fig. 11 bis 15: verschiedene Querschnitte durch Ausführungen eines Kanals gemäß der Erfindung mit unterschiedlicher Konstruktion der lösbaren Verbindung zwischen einer Anschlüsse aufweisende Leiste und dem fest installierten Kanalkörper.

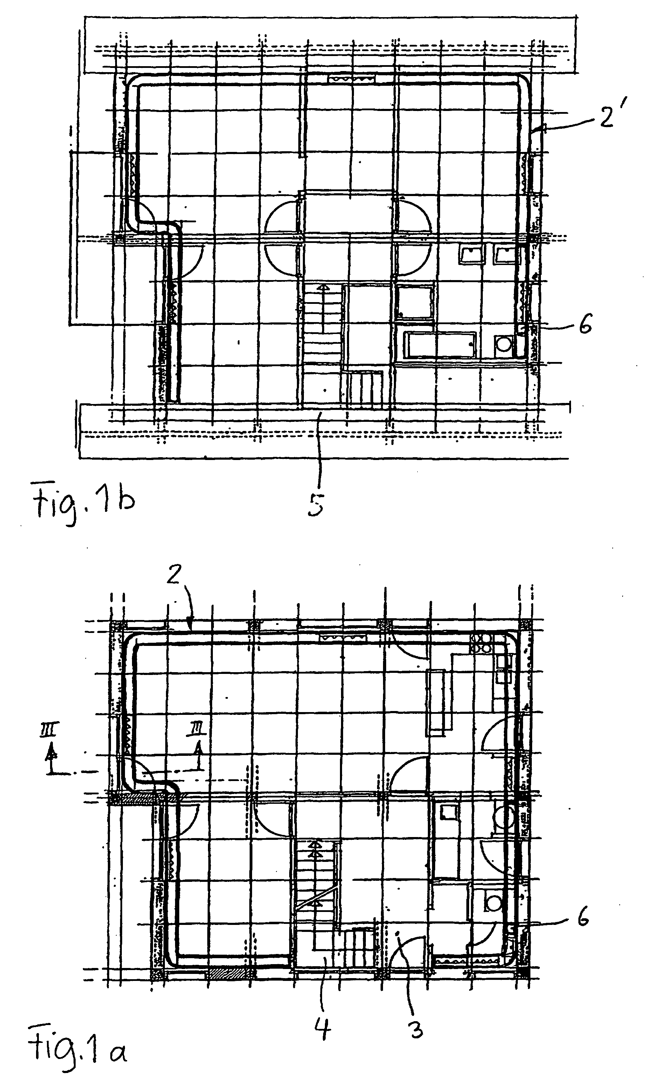

Die Grundrisse gemäß den Fig. 1a und 1b zeigen jeweils einen dick durchgezogenen, offenen Ringkanal 2 bzw. 2' enthaltend die wesentlichen Versorgungsleitungen für das betreffende Stockwerk. Die Ringkanäle 2, 2' sind unterbrochen, und zwar im Erdgeschoß durch Eingangsbereich 3, Treppenhaus 4 und im Obergeschoß durch die gesamte Frontseite 5 des Gebäudes. Die Ringkanäle 2, 2' sind mittels eines in Fig. 1a und 1b bei 6 angedeuteten Steigkanals 6 miteinander und mit der im Keller des Gebäudes untergebrachten Strom-, Heizungs- und Wasserversorgung (nicht gezeigt) verbunden.

Beide Ringkanäle 2, 2' sind im Stoßbereich zwischen Wand 8 und Fußboden 9 angeordnet und enthalten mindestens eine Heiz- und ggf. Kühlluftleitung, davon wärmeisolierte Kalt- und Warmwasserleitungen 7 sowie Stromleitungen 20, wobei zu diesen Stromleitungen außer den üblichen Stromversorgungsleitungen für Beleuchtung, Haushaltsgeräte usw. Anschlußleitungen für Telefon, Fernsehen, PC, Antenne und dgl. gehören.

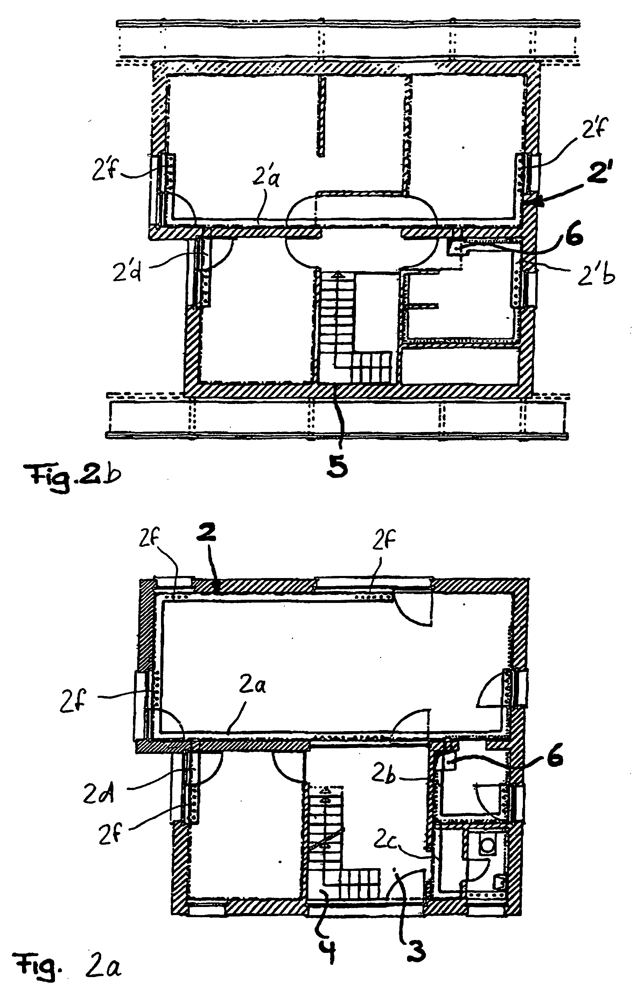

Wenn ein Hausanschluß für Gas vorgesehen ist und mit Gas geheizt und gekocht werden soll, kann der Ringkanal 2 im Erdgeschoß auch eine Gasleitung enthalten, nicht aber der Ringkanal im Obergeschoß gemäß Fig. 2, in dem keine Kochgelegenheit vorgesehen ist.

In den modifizierten Grundrissen gemäß den Fig. 2a und 2b weist der insgesamt wieder mit dem Bezugszeichen 2 im Erdgeschoß und 2' im Obergeschoß bezeichnete Kanal einen Zentralabschnitt auf, der direkt mit dem Steigkanal 6 verbunden ist. Von diesem Zentralabschnitt zweigen einzelne Kanalabschnitte 2a, 2'a; 2b, 2'b; 2c, 2'c; 2d, 2'd fingerförmig zu den einzelnen Zapfstellen bzw. Luftauslässen 2f, 2'f, in den Räumen des Gebäudes ab, wobei die Luftauslässe vorzugsweise unter Fenstern vorgesehen sind.

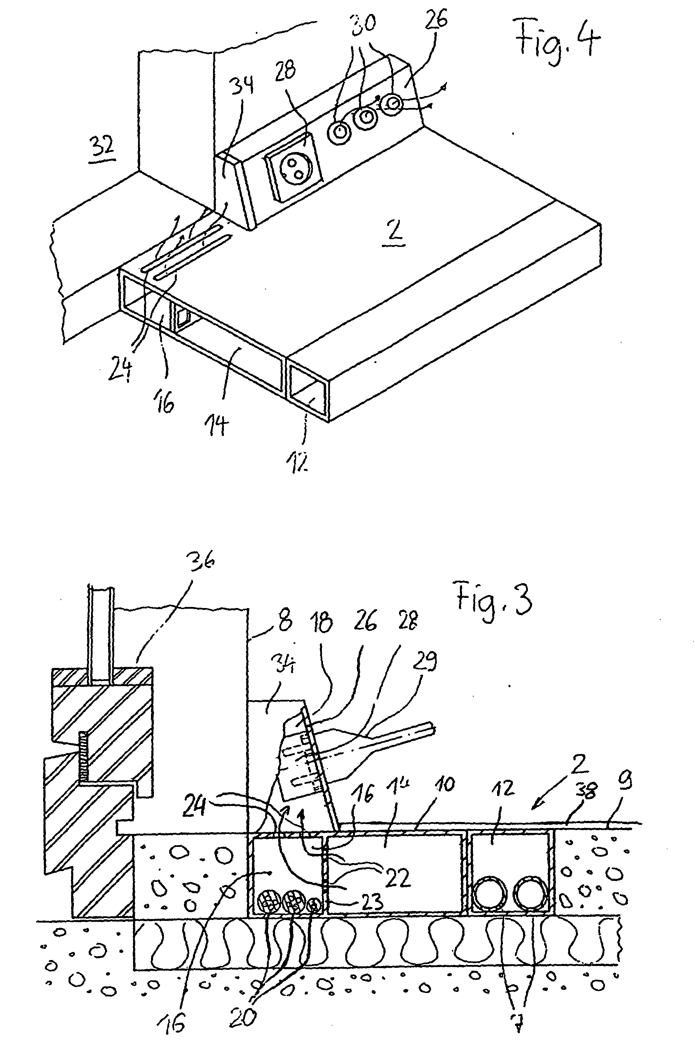

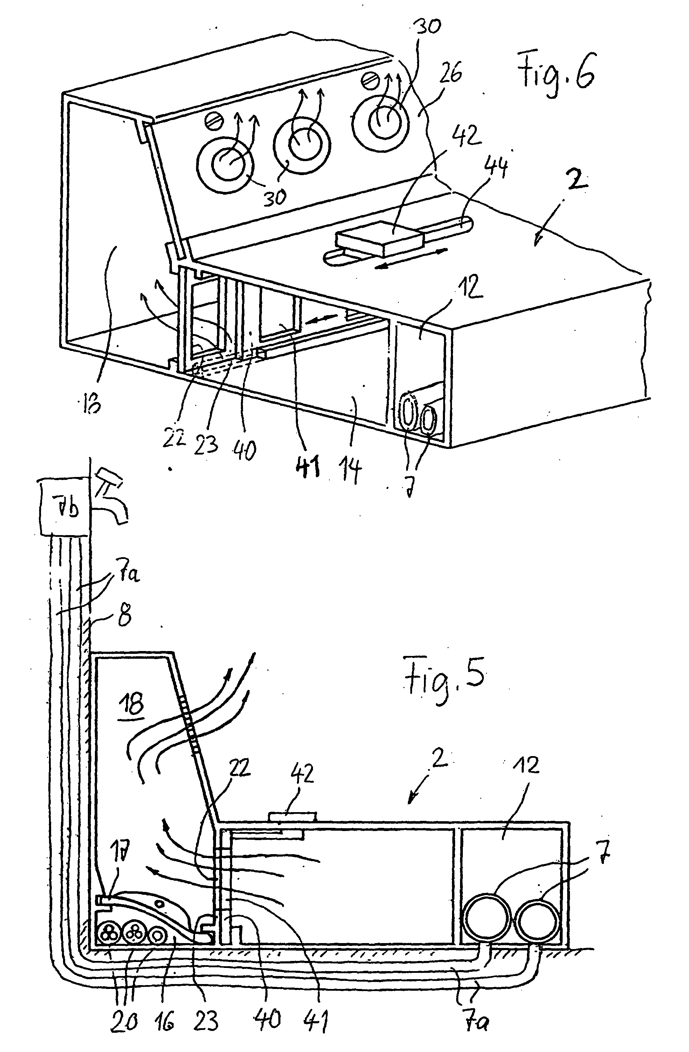

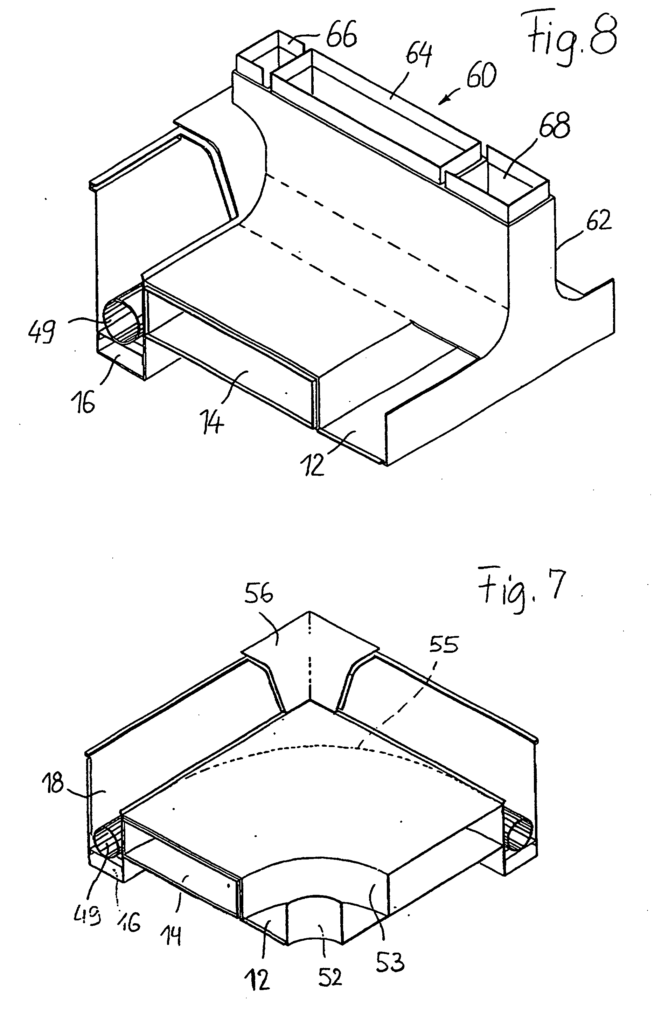

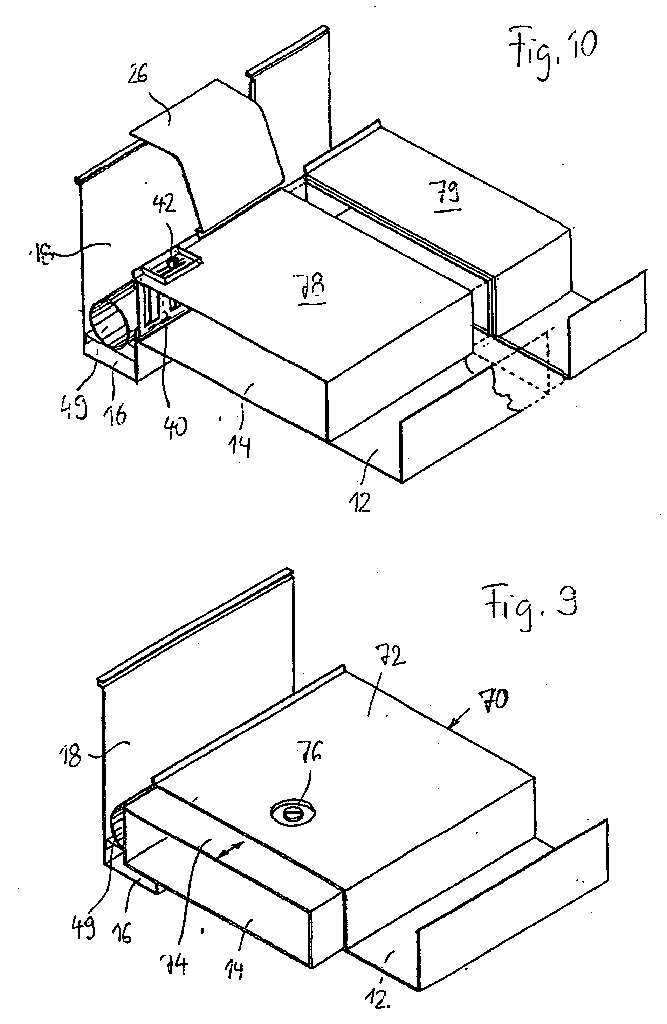

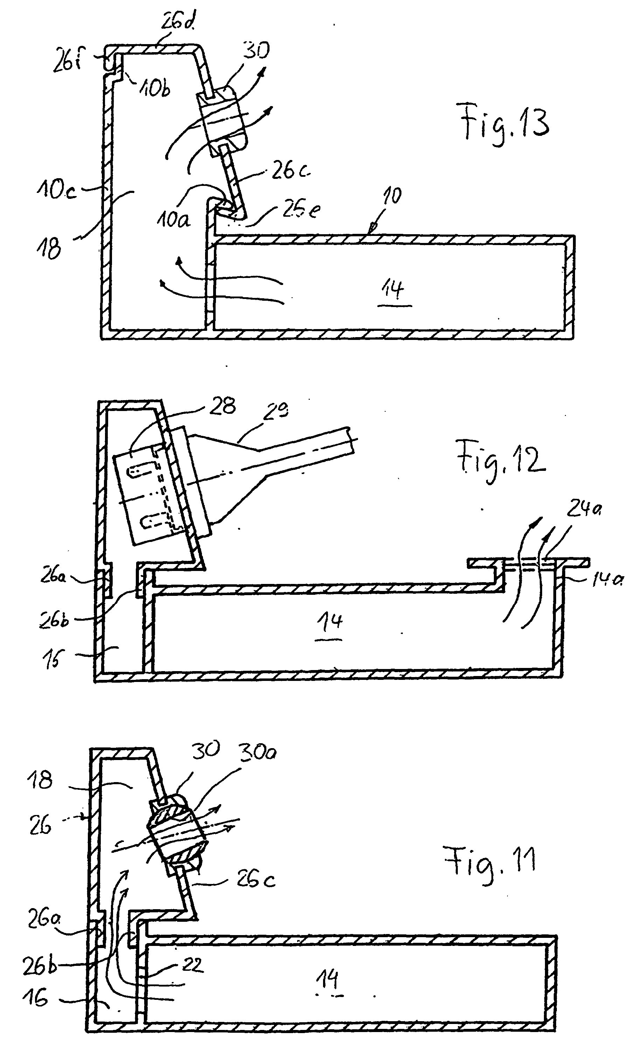

Fig. 3 und 4 zeigt eine typische Ausgestaltung eines Kanals 2 gemäß der Erfindung im einzelnen. Der Kanal 2 enthält einen im wesentlichen im Boden des Erdgeschosses versenkten Kanalkörper 10, der insgesamt vier Abteile 12, 14, 16 und 18 enthält. Das Abteil 14 steht mit der Heizanlage in Verbindung, welche gewöhnlich im Keller angeordnet ist und angewärmte Heizluft bereitstellt, die in nicht gezeigter Weise in das Abteil 14 eingeführt wird. Das Abteil 16, welches die erwähnten Stromleitungen 20 enthält, kommuniziert mit dem Abteil 14 über seitliche Schlitze 22 in einer Trennwand 23.

Das Abteil 18 ist auf dem Fußboden 9 im Stoßbereich zwischen Wand 8 und Fußboden 9 nach Art einer üblichen Fußleiste aufgesetzt und bildet somit den einzigen, vom Innenraum aus sichtbaren Teil des Kanals 2.

In einer lösbar mit dem Abteil 18 verbundenen Leiste 26 sind Auslässe, wie eine Steckdose 28 für einen Stecker 29, Luftdüsen 30 zum Auslaß der Heizluft in den Innenraum sowie Schalter, z.B. Lichtschalter (nicht gezeigt), vorgesehen.

Gemäß Fig. 4 sind Schlitze 24 zur direkten Einleitung der Heizluft in den Innenraum nur in einem Türöffnungsbereich vorgesehen, in welchem das Abteil 18 wegen einer Türöffnung 32 unterbrochen ist. In den nicht unterbrochenen Wandbereichen des Innenraumes gehen die Abteile 16, 18 direkt ineinander über, wie es die Fig. 6 zeigt.

Mit 34 sind ein seitliches Abdeckteil für das Abteil 18 und mit 36 eine Tür bezeichnet, die durch die Türöffnung 32 hindurch in den Innenraum hinein öffenbar ist.

Das Abteil 18 kann mit schalldämmendem Material ausgekleidet sein, vorzugsweise im Bereich der Wand 8, um Geräusche, wie Strömungsgeräusche von Flüssigkeit und Luft, sowie die Fortpflanzung von Schall zu dämpfen, der außerhalb des betreffenden Raumes entsteht.

Um den Kanal 2 bis auf das fußleistenartige Abteil 18 unsichtbar zu machen, kann zusätzlich eine Auflage 38 in Form eines Teppichbodens, Parkettbodens, eines Fliesenbodens oder dgl. wie üblich vorgesehen sein.

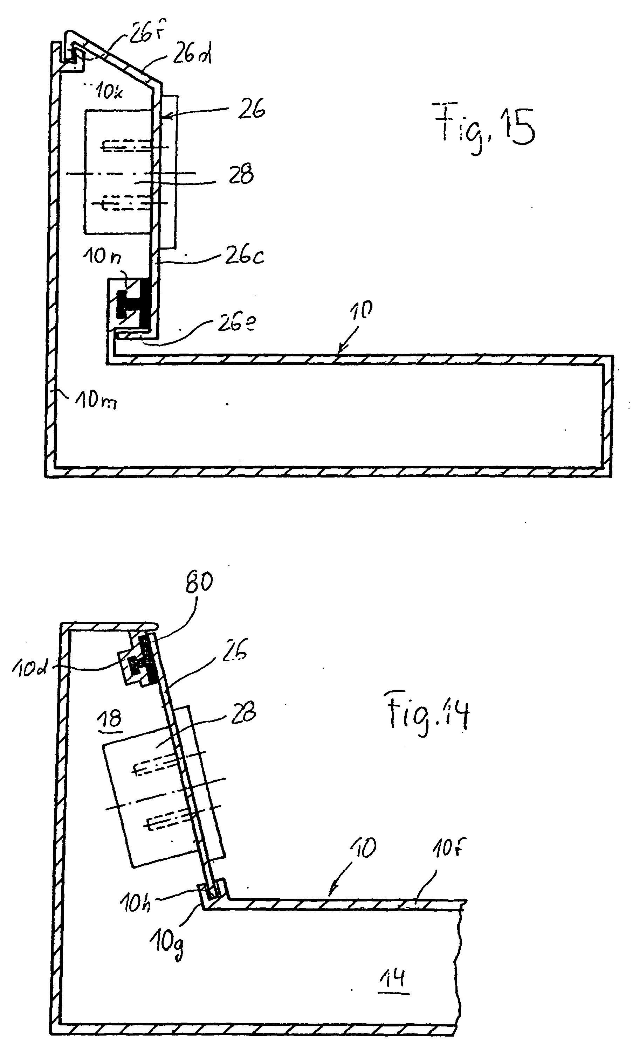

In den Fig. 5 und 6, welche in ähnlichen Darstellungen wie in den Fig. 3 und 4 Abwandlungen zeigen, sind für gleiche oder gleichartige Teile gleiche Bezugszeichen verwendet.

Das die Stromleitungen 20 aufnehmende Abteil 16 ist hier durch eine Trennwand 17 von dem Abteil 18 getrennt. Im Abteil 14 ist ein Schieber 40 angeordnet, der über einen Handgriff 42 von der Oberseite des Fußbodens her längs eines Schlitzes 44 und damit horizontal parallel längs der die Schlitze 22 enthaltenden Trennwand 23 zwischen den Abteilen 14 und 18 verschieblich ist. Der Schieber 40 enthält mindestens eine Öffnung 41. Somit läßt sich durch Verschieben des Schiebers 40 der Öffnungsquerschnitt der Schlitze 22 und damit die vom Abteil 44 in das Abteil 18 und von dort über die Düsen 30 in den Innenraum gelangende Heizluftmenge regulieren.

In Fig. 5 ist zusätzlich gezeigt, wie Zweigleitungen 7' der Kalt- und Warmwasserleitungen zu einer Zapfstelle 7b in gewünschter Höhe der Wand 8 geführt sind.

In den nachfolgend beschriebenen Fig. 7 bis 10 ist im Abteil 18 unmittelbar oberhalb des Abteils 16 für die Stromleitungen 20 zusätzlich ein Staubsaugschlauch 49 aufgenommen, der mit einem beispielsweise im Keller installierten Sauggebläse kommunizieren kann. Das Abteil 12 zur Aufnahme der Kalt- und Warmwasserleitungen 7 ist in den Fig. 7 bis 10 nach oben offen dargestellt, in der Praxis jedoch durch einen Fußbodenbelag 38 oder eine andere Abdeckung nach oben abgedeckt. Schließlich ist in den Fig. 7 bis 12 die das Abteil 18 oben abdeckende Leiste 26 der Einfachheit halber nicht gezeichnet.

Fig. 7 zeigt einen gerundeten Eckenabschnitt 50 des Kanals 2 in der Ecke eines Innenraums des Gebäudes, an der zwei Wände unter einem Winkel von 90° aneinander anstoßen. Das Abteil 12 ist dabei durch Viertelkreisbögen 52, 53 begrenzt, während die Abteile 16, 18 zur Führung der Stromleitungen 20 und des Staubsaugschlauches 49 lediglich innen durch eine Viertelkreisrundung 55 begrenzt sind. Ein Leisten-Eckelement 56 dient zum Anschluß der (nicht gezeichneten) Leisten 26.

Fig. 8 zeigt einen Verzweigungsabschnitt 60 des Kanals 2, wobei an diesen Verzweigungsabschnitt 60 vertikal ein nicht gezeichneter Steigkanal zum Aufnehmen von vertikalen Zweigleitungen sämtlicher im Kanal 2 untergebrachter Leitungen einschließlich der Wasserleitungen 7 und der Stromleitungen 20 anschließt.

Der Verzweigungsabschnitt 60 hat einen vertikal sich nach oben erstreckenden Teil 62 mit Steckverbindungsteilen 64, 66, 68 zum Aufstecken des Steigkanals, wobei durch das Teil 66 die Elektroleitungen und ggf. der Staubsaugerschlauch, durch das Teil 64 die Warmluft oder Kaltluft und durch das Teil 68 die Warm- und Kaltwasserleitungen nach oben in das nächste Stockwerk von den horizontalen Leitungen abgezweigt werden.

Fig. 9 zeigt ein Kanalelement 70 des Kanals 2, das zum Ineinanderstecken mit anderen ähnlich gestalteten Kanalelementen ausgebildet ist. Das Kanalelement 70 besitzt dabei ein mehr oder weniger in ein äußeres Element 72 in Pfeilrichtung herein- oder herausschiebbares inneres Kanalelement 74, welches das Abteil 14 bildet. Das innere Kanalelement ist mittels einer Schraube 76 relativ zum äußeren Kanalelement 76 feststellbar. Auf diese Weise lassen sich unterschiedlich große Abstände zwischen Kanalelementen genormter Länge ausgleichen, die in der Fabrik vorgefertigt sind und an der Baustelle zu Ringkanälen 2, 2' zusammengesetzt werden.

Fig. 10 zeigt zwei unterschiedliche Kanalelemente 78, 79 dieser Art, von denen das Kanalelement 78 mit einem Schieber 40 mit Betätigungsgriff 42 gemäß Fig. 6 ausgerüstet ist. Bei 26 ist ein Stück einer hier als Winkelprofil ausgebildeten, auf den Kanal aufschnappbaren Leiste gezeigt.

Die Fig. 11 bis 15 zeigen im wesentlichen Abwandlungen der Anbringung einer den Kanal oben im sichtbaren Bereich des Innenraumes abschließenden Leiste 26, die trotz der konstruktiven Unterschiede der Einfachheit halber durchgängig in diesen Figuren mit dieser Bezugszahl belegt ist.

Davon abgesehen sind geringfügige andere Abwandlungen vorgesehen. Der Einfachheit halber ist ein Abteil 12 enthaltend die Wasserleitungen 7 nicht dargestellt. Auch ist kein gesondertes Abteil enthaltend die Stromleitungen gezeichnet.

Bei der Ausgestaltung nach den Fig. 11 und 12 bildet die Leiste 26 einen lediglich nach unten offenes, hohles Profil, welches das Abteil 18 des Kanals umschließt. Unten hat die Leiste 26 zwei parallele Schenkel 26a, 26b, die in ein nach oben offenes U-Profil, welches das Abteil 16 bildet, einfederbarer sind. Im in Fig. 11 rechten Schenkel des U-Profils sind Schlitze 22 vorgesehen, über welche Heizluft aus dem Abteil 14 in das Abteil 16 und von dort über den Zwischenraum zwischen den Schenkeln 26a, 26b in das Abteil 18 gelangen kann. Aus dem Abteil 18 tritt die Kühlluft über die in einem vorderen Wandteil 26c der Leiste 26 aufgenommene Runddüsen 30 aus. Diese Runddüsen haben bei der Ausführung nach Fig. 11 kugelige Einsätze 30a, welche eine Verstellung von Hand und damit eine Variierung der Heizluftaustrittsrichtung ermöglichen.

Die Ausführung nach Fig. 12 zeigt eine Anordnung mit gleich wie in Fig. 11 ausgebildeter Leiste 26, wobei jedoch ein Schnitt auf der Höhe einer Steckdose 28 mit eingestecktem Stecker 29 dargestellt ist. Eine weitere Abwandlung besteht jedoch darin, daß keine Luftdüsen 30 in der Leiste 26 vorhanden sind sondern die Luft in diesem Fall direkt aus dem Abteil 14 in einen Fußbodenbereich über Auslaßschlitze 24a in einem Steigabschnitt 14a des Abteils 14 vorgesehen sind.

Die Konstruktion nach der Fig. 13 ist insoweit abgewandelt, als die Leiste 26 hier ein Winkelprofil bildet, welches einen horizontalen Winkelabschnitt 26d und einen schrägen Leistenabschnitt 26c enthaltend Düsen 30, sonstige Anschlüsse und Schalter aufwiest. Der schräge Leistenabschnitt 26c hat an seinem unteren Ende einen Haken 26e, mit dem er hinter einen Vorsprung 10a am Kanalkörper 10 greift. Der horizontale Winkelabschnitt 26d greift mit einem vertikalen Hakenabschnitt 26f hinter einen Vorsprung 10b an einem Wandabschnitt 10c des Kanalkörpers.

Die in den Figuren 11 bis 13 gezeigten Ausführungsformen der Leiste 26 setzen eine federnd elastische Ausbildung voraus, damit die Leiste durch Spreizen auf den Kanalkörper 10 aufgeschnappt werden kann.

Die Fig. 14 und 15 zeigen zwei weitere Abwandlungen des Kanalkörpers 10, wobei in Fig. 14 die Leiste 26 prinzipiell wie bei der Ausführung nach den Fig. 3 bis 6 ausgebildet ist.

Gemäß Fig. 14 ist die Leiste 26 mit dem Kanalkörper 10 wie folgt verbunden: An seinem oberen Ende hat der Kanalkörper 10 einen mit einem Permanentmagneten 80 ausgerüsteten Stegabschnitt 10d. Die horizontale Wand 10f des Kanalkörpers oberhalb des Abteils 14 hat an ihrem in Fig. 14 linken Ende einen schräg nach oben stehenden Hals 10g mit einer Aufnahmenut 10h. Die Leiste 26 wird zur Montage mit ihrem unteren Ende in diese Aufnahmenut 10h eingesteckt und mit ihrem oberen Ende vom Magneten 80 angezogen und gehalten.

Bei der Ausführung nach Fig. 15 ist die Leiste zu einem winkelförmigen Profil geformt und mit einem Haken 26f an einem oberen Schenkel 26d des Leistenprofiles 26 in eine Aufnahmenut einer Verdickung 10k am oberen Ende einer hochstehenden Rückwand 10m des Kanalkörpers 10 eingerastet. Ein horizontaler Steg 26e am unteren Ende eines vertikalen Schenkels 26c der Leiste 26 hintergreift einen Vorsprung 10n am linken Ende des das Abteil 14 begrenzenden Abschnittes des Kanalkörpers 10, wobei dieser Vorsprung 10n mit einem Permanentmagneten 80 versehen ist. In diesem Fall wird die Leiste 26 in die Nut 10k eingehängt und von dem Magneten 80 im Vorsprung 10n leicht abnehmbar gehalten.

Die Leisten 26 der Ausführungen nach den Figuren 14 und 15 sind aus einem ferromagnetischen, elastischen Material gefertigt, während sie sonst auch aus einem unmagnetischen Werkstoff, wie einem Kunststoff, bestehen können.

Das Kanalsystem gemäß der Erfindung kann nicht nur Vorlaufleitungen sondern auch Rücklaufleitungen enthalten, so z.B. die Brauchwasserablaufleitungen. Es dürfte jedoch unzweckmäßig sein, auch die Wasserableitungen der Toiletten über die Kanäle 2 bzw. 2' zu führen. Hier wird man in der Praxis getrennte Abwasserleitungen wie üblich vorsehen.

Die in den Fig. 9 und 10 gezeichneten Kanalelemente können unterschiedliche Längen haben, so daß eine Großserienproduktion der Kanalelemente, der Anschlußelemente, welche mit Anschlußöffnungen, Schalteröffnungen usw. ausgerüstet sind, sowie gesonderter Eckenabschnitte gemäß Fig. 7 und Verzweigungsabschnitte gemäß Fig. 8 möglich ist. Dies vereinfacht und beschleunigt die Installation an der Baustelle ganz erheblich.

## Patentansprüche

1. Anordnung zur Bündelung mindestens der Versorgungsleitungen für Strom, Heizung und Wasser in einem Gebäude in Form eines Kanals (2, 2'), der im Stoßbereich von Wand (8) und Fußboden (9) angeordnet ist, wobei der Kanal Auslässe für die Versorgungsleitungen hat, **dadurch gekennzeichnet, daß** der Kanal (2, 2') mit seinem die Versorgungsleitungen aufnehmenden Teil im Fußboden (9) versenkt angeordnet ist und lediglich eine, Auslässe (28, 30), Schalt- und/oder Zapfstellen der Versorgungsleitungen enthaltende Leiste (26), welche Bestandteil der Kanalwandung bildet und als übliche Fußbodenleiste geformt ist, über den Fußboden nach oben vorragt.

2. Anordnung nach Anspruch 1, **dadurch gekennzeichnet, daß** zumindest Teilabschnitte des Kanals (2, 2') entlang der Innenseite der Gebäudeaußenwand verlaufen.

3. Anordnung nach Anspruch 1 oder 2, **dadurch gekennzeichnet, daß** der Kanal einen Zentralabschnitt aufweist, der direkt mit der Strom-, Heizungs- und Wasserversorgung des Gebäudes verbunden ist und von dem aus Teilabschnitte fingerförmig in die einzelnen Räume des Gebäudes abzweigen.

4. Anordnung nach einem der Ansprüche 1 bis 3, **dadurch gekennzeichnet, daß** der Kanal mindestens eine Heiz- und ggf. Kühlluftleitung, eine davon wärmeisolierte Kaltund Warmwasserleitung (7) sowie Stromleitungen (20) enthält.

5. Anordnung nach Anspruch 4, **dadurch gekennzeichnet, daß** die Versorgungsleitungen in separaten Kanalabteilen (12, 14, 16, 18) untergebracht sind.

6. Anordnung nach einem der Ansprüche 1 bis 5, **dadurch gekennzeichnet, daß** zu den Stromleitungen (20) Anschlußleitungen für Telefon, Fernsehen, PC, Antenne und dergleichen gehören.

7. Anordnung nach einem der Ansprüche 1 bis 6, **dadurch gekennzeichnet, daß** der Kanal (2, 2') eine Gasleitung und gegebenenfalls einen Staubsaugschlauch (49) enthält.

8. Anordnung nach einem der Ansprüche 1 bis 7 für ein mehrstöckiges Gebäude, **dadurch gekennzeichnet, daß** ein Steigkanal (6) vorgesehen ist, der die Kanäle (2, 2') in den einzelnen Stockwerken mit der im Keller oder Erdgeschoß des Gebäudes untergebrachten Strom-, Heizungs- und Wasserversorgung verbindet.

9. Anordnung nach einem der Ansprüche 1 bis 8, **dadurch gekennzeichnet, daß** die Leiste (26) lösbar mit dem Kanal (2) verbunden ist, insbesondere durch Aufschnappen.

10. Anordnung nach einem der vorhergehenden Ansprüche, **dadurch gekennzeichnet, daß** der Kanal (2, 2') und gegebenenfalls die Leiste (26) in Elemente (72; 78, 79) genormter Länge aufgeteilt ist, die zur Montage zusammenschiebbar gestaltet sind.

## Claims

1. Arrangement for bundling in a building at least the supply lines for electric power, heating and water in the form of a duct (2, 2'), which is located in the abutment area of the wall (8) and floor (9), the duct having outlets for the supply lines, **characterized in that** with its part receiving the supply lines the duct (2, 2') is placed flush in the floor (9) and only the strip (26) containing outlets (28, 30), switching and/or tapping connections of the supply lines and which forms part of the duct wall and is shaped in the form of a standard floor strip, projects upwards above the floor.

2. Arrangement according to claim 1, **characterized in that** at least portions of the duct (2, 2') run along the inside of the outer wall of the building.

3. Arrangement according to claim 1 or 2, **characterized in that** the duct has a central portion, which is directly connected to the electric power, heating and water supply of the building and from which portions branch off in finger-like manner into the individual rooms of the building.

4. Arrangement according to one of the claims 1 to 3, **characterized in that** the duct contains at least one heating and optionally cooling air pipe, a cold and hot water pipe (7) thermally insulated therefrom, as well as electric power lines (20).

5. Arrangement according to claim 4, **characterized in that** the supply lines are housed in separate duct compartments (12, 14, 16, 18).

6. Arrangement according to one of the claims 1 to 5, **characterized in that** connection lines for the telephone, television, PC, antenna and the like belong to the electric power lines (20).

7. Arrangement according to one of the claims 1 to 6, **characterized in that** the duct (2, 2') contains a gas pipe and optionally a dust exhausting hose (49).

8. Arrangement according to one of the claims 1 to 7 for a multistorey building, **characterized in that** a riser (6) is provided connecting the ducts (2, 2') in the individual storeys with the power supply, heating and water supply located in the cellar or ground floor of the building.

9. Arrangement according to one of the claims 1 to 8, **characterized in that** the strip (26) is detachably connected with the duct (2), particularly by snapping on.

10. Arrangement according to one of the preceding claims, **characterized in that** the duct (2, 2') and optionally the strip (26) is subdivided into elements (72; 78, 79) of standard length and which can be slid together for assembly purposes.

## Revendications

1. Disposition de regroupement au moins des lignes d'alimentation pour le courant, le chauffage et l'eau dans un bâtiment sous la forme d'un canal (2, 2') disposé dans la zone de jointure de la paroi (8) et du plancher (9) sachant que le canal a des sorties pour les lignes d'alimentation, **caractérisée en ce que** le canal (2, 2') est disposé avec sa partie contenant les lignes d'alimentation noyée dans le plancher (9) et simplement une barre (26) contenant des sorties (28, 30), des points de commutation et/ou des prises d'eau des lignes d'alimentation, laquelle forme le composant de la paroi du canal, est moulée comme une plinthe habituelle et fait saillie vers le haut, au-dessus du plancher.

2. Disposition selon la revendication 1, **caractérisée en ce que** des tronçons partiels du canal (2, 2') passent au moins le long du côté interne de la paroi extérieure du bâtiment.

3. Disposition selon la revendication 1 ou 2, **caractérisée en ce que** le canal présente un tronçon central, qui est relié directement à l'alimentation en courant, chauffage et eau du bâtiment et à partir duquel des tronçons partiels bifurquent en forme de doigts dans les pièces individuelles du bâtiment.

4. Disposition selon l'une des revendications 1 à 3, **caractérisée en ce que** le canal contient au moins une conduite d'air chaud et le cas échéant une conduite d'air froid, une conduite calorifugée d'eau froide et d'eau chaude (7) ainsi que des lignes électriques (20).

5. Disposition selon la revendication 4, **caractérisée en ce que** les lignes d'alimentation sont logées dans des compartiments de canaux séparés (12, 14, 16, 18).

6. Disposition, selon l'une des revendications 1 à 5, **caractérisée en ce que** des lignes de raccordement pour le téléphone, la télévision, l'ordinateur, l'antenne et autres font partie des lignes électriques (20).

7. Disposition selon l'une des revendications 1 à 6, **caractérisée en ce que** le canal (2, 2') contient une canalisation de gaz et le cas échéant un tuyau d'aspirateur (49).

8. Disposition selon l'une des revendications 1 à 7 pour un bâtiment à plusieurs étages, **caractérisée en ce qu'**un canal de montée (6) est prévu, qui relie les canaux (2, 2') dans les étages individuels à l'alimentation en courant, chauffage et eau logée dans la cave ou au rez-de-chaussée du bâtiment.

9. Disposition selon l'une des revendications 1 à 8, **caractérisée en ce que** la barre (26) est reliée au canal de manière amovible (2), en particulier par verrouillage par ressort.

10. Disposition selon l'une des revendications précédentes, **caractérisée en ce que** le canal (2, 2'), et le cas échéant la barre (26), est réparti en éléments (72, 78, 79) de longueur standard, qui sont configurés de manière coulissante pour le montage.
